(19) Europäisches Patentamt
European Patent Office
Office européen des brevets

(11) **EP 3 470 203 B1**

(12) **FASCICULE DE BREVET EUROPEEN**

(45) Date de publication et mention
de la délivrance du brevet:
**08.01.2020 Bulletin 2020/02**

(51) Int Cl.:
***B29C 49/48*** *(2006.01)*   ***B29C 49/78*** *(2006.01)*
***B29C 49/42*** *(2006.01)*   *B29C 49/06* *(2006.01)*
*B29K 67/00* *(2006.01)*   *B29L 31/00* *(2006.01)*

(21) Numéro de dépôt: **18199146.4**

(22) Date de dépôt: **08.10.2018**

(54) **UNITE DE MOULAGE EQUIPEE D'UN SYSTEME DE BOXAGE A ELECTROVANNE PROPORTIONNELLE**

SPRITZGUSSEINHEIT, DIE MIT EINEM BOXENHERSTELLUNGSEINSATZ MIT STETIGMAGNETVENTIL AUSGESTATTET IST

MOULDING UNIT EQUIPPED WITH A BOXING SYSTEM WITH PROPORTIONAL SOLENOID VALVE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.10.2017 FR 1759657**

(43) Date de publication de la demande:
**17.04.2019 Bulletin 2019/16**

(73) Titulaire: **Sidel Participations**
**76930 Octeville-sur-Mer (FR)**

(72) Inventeur: **DERRIEN, Mikaël**
**76930 Octeville-sur-Mer (FR)**

(74) Mandataire: **Sidel Group**
**c/o Sidel Participations**
**Avenue de la Patrouille de France**
**76930 Octeville-sur-mer (FR)**

(56) Documents cités:
WO-A1-2016/083711   DE-A1-102006 061 301
US-A1- 2015 290 867   US-A1- 2017 021 550

## Description

L'invention a trait à la fabrication des récipients par formage d'ébauches en matière plastique tel que le polytéréphtalate d'éthylène (PET).

Ordinairement, un récipient comprend un corps, un fond fermant le corps à une extrémité inférieure de celui-ci, et un col qui s'ouvre à une extrémité supérieure du corps pour permettre le remplissage et la vidange du récipient.

Le récipient est fabriqué par formage à partir d'une ébauche, c'est-à-dire une préforme ou un récipient intermédiaire lui-même obtenu à partir d'une préforme ayant subi une opération préalable de préformage.

Une technique classique de fabrication de récipients est le soufflage (éventuellement doublé d'un étirage). Cette technique consiste à introduire l'ébauche, préalablement chauffée à une température supérieure à la température de transition vitreuse de la matière (environ 80°C dans le cas du PET), dans un moule muni d'une paroi définissant une cavité à l'empreinte du récipient, et à injecter par le col de l'ébauche un fluide, tel qu'un gaz sous pression (généralement de l'air) pour plaquer la matière contre la paroi du moule.

En général, le formage comprend même deux phases consécutives : une phase de présoufflage lors de laquelle on injecte dans l'ébauche un fluide à une pression de présoufflage, et une phase de soufflage lors de laquelle on injecte dans l'ébauche un fluide à une pression de soufflage supérieure à la pression de présoufflage. Dans les procédés classiques, où de l'air est employé pour réaliser le formage, la pression de présoufflage est comprise entre 5 et 10 bars, et la pression de soufflage entre 20 et 40 bars.

Certaines applications nécessitent de former sur le récipient des réserves en creux, dans un but qui peut être esthétique (par exemple pour la création de galbes), fonctionnel (par exemple pour la réalisation d'une poignée de préhension du récipient) ou encore structurel (par exemple pour la réalisation d'un fond ayant subi un étirage supplémentaire et destiné à absorber la déformation du récipient lors d'un remplissage à chaud).

Lorsqu'une telle réserve atteint une certaine profondeur, le récipient ne peut pas être formé dans un moule ordinaire car, malgré la pression de soufflage élevée, celle-ci est insuffisante pour parfaitement appliquer la matière contre le relief du moule destiné à former la réserve, surtout dans les zones tournées à l'opposé du col du récipient à partir duquel se développe la bulle de soufflage.

Aussi, on forme habituellement un récipient pourvu d'une telle réserve dans un moule muni d'un insert (typiquement un fond de moule) mobile initialement escamoté dans la paroi du moule et déployé en cours de formage pour venir repousser la paroi du récipient. Cette technique est notamment illustrée dans la demande internationale WO 2016/083711 (Sidel Participations), qui décrit un vérin double effet muni d'un piston sur lequel est monté l'insert, ce piston délimitant dans le vérin une chambre primaire dont la pressurisation déplace l'insert vers sa position déployée, et une chambre secondaire dont la pressurisation (simultanément à la dépressurisation de la chambre primaire) déplace l'insert vers sa position escamotée.

Un tel repoussage (appelé boxage) est notamment utilisé pour le formage d'un récipient muni d'une poignée intégrée ou d'un fond ayant subi un étirage supplémentaire et destiné à absorber la déformation du récipient lors d'un remplissage à chaud.

Le boxage est une opération complexe.

Une première difficulté du boxage est que l'insert mobile doit, lors de son déplacement, vaincre l'effort résistant opposé par l'ébauche. Or cet effort résistant est variable, dans de grandes proportions, et pour plusieurs raisons.

Premièrement, la pression régnant dans l'ébauche (pression dont dépend l'effort résistant) est elle-même variable. En effet, non seulement on injecte dans l'ébauche un fluide à différentes pressions (pression de présoufflage puis pression de soufflage) mais, en outre, le volume de l'ébauche augmente au cours du formage jusqu'à atteindre la paroi du moule.

Deuxièmement, la surface de l'ébauche en contact avec l'insert (surface dont dépend également l'effort résistant) varie elle aussi au cours du formage.

Troisièmement, les procédés actuels de formage incluent le plus souvent une phase dite de récupération, qui consiste à réinjecter dans un circuit d'air une partie de l'air sous pression issu du soufflage du récipient, pour une réutilisation ultérieure. Cette récupération induit des variations de pression et de débit d'air vers le récipient ou en provenance de celui-ci. Il en résulte une variation de l'effort résistant opposé par l'ébauche.

Une deuxième difficulté du boxage découle de la compressibilité du gaz employé pour commander le vérin sur lequel est monté l'insert. Comme décrit dans la demande internationale WO 2016/083711 précitée, la chambre secondaire du vérin est raccordée à un restricteur de débit qui a pour fonction de moduler (et, plus précisément, réduire) la vitesse de déplacement de l'insert (en l'espèce un fond de moule) notamment en fonction de la capacité du récipient, du diamètre de l'insert (c'est-à-dire, en l'espèce, du fond de moule). Cette modulation est réalisée en faisant varier le débit de l'air à l'échappement. Cependant, la compressibilité du gaz fait que l'action du restricteur de débit est affectée d'un retard. Lorsque la course de déplacement de l'insert est faible, typiquement 15 mm, l'intervention du restricteur de débit ne provoque le ralentissement de l'insert que sur une distance très courte, à la fin du boxage. Dans ce cas, l'insert a parcouru l'essentiel de sa course avant même que la pression de soufflage n'ait été atteinte dans l'ébauche en cours de formage, au détriment de la prise d'empreinte (et donc de la qualité du récipient). Pour accroître le freinage de l'insert on pourrait refermer un peu plus le restricteur de débit, mais dans ce cas les efforts résistants s'appliquant sur le vérin empêcheraient celui-ci d'achever sa course.

Une troisième difficulté du boxage est liée à la variété de taille des réserves en creux (respectivement la variabilité des dimensions des inserts -typiquement des diamètres des fonds de moules) à former. En pratique, les vérins sont dimensionnés pour pouvoir assurer le boxage de réserves de grande superficie (par exemple. des fonds de grand diamètre). Cependant ces vérins s'avèrent surdimensionnés lorsqu'ils sont employés pour le boxage de réserves de superficies comparativement plus faibles. Dans ce cas, leur inertie rend complexe la modulation de leur vitesse par une simple régulation de la pression.

De fait, lorsque la réserve à former est de faible superficie, les efforts opposés par l'ébauche en cours de formage sont faibles, et la mesure la plus simple consiste à accroître l'action du restricteur de débit pour freiner le déplacement de l'insert. Mais le risque induit par cette mesure est de bloquer complètement l'insert avant qu'il n'ait atteint sa fin de course.

On voit par là que les techniques de boxage actuelles, y compris celle décrite dans la demande WO 2016/083711 précitée, ne permettent pas de contrôler précisément la vitesse de déplacement ou la position de l'insert. Dans la pratique, on constate que fréquemment son déplacement est trop rapide, ou au contraire trop lent. Pour résumer, dans de nombreux cas, la vitesse de déplacement de l'insert n'est pas maîtrisée.

L'invention vise à surmonter ces difficultés.

Plus précisément, un objectif de l'invention est de proposer une unité de moulage équipée d'un système de boxage permettant de contrôler de manière plus efficace et précise la position et/ou la vitesse de déplacement de l'insert, notamment en fonction de la pression régnant dans le récipient en cours de formage.

A cet effet, il est proposé une unité de moulage pour la fabrication d'un récipient à partir d'une ébauche en matière plastique, cette unité de moulage comprenant :

- un moule muni d'une paroi définissant une cavité à l'empreinte du récipient et d'un insert mobile par rapport à la paroi entre une position rétractée, dans laquelle il s'étend en retrait par rapport à la cavité, et une position déployée, dans laquelle il fait au moins en partie saillie dans la cavité ;
- au moins un système de boxage comprenant un vérin pourvu d'un corps de vérin, d'un piston et d'une tige solidaire du piston et sur laquelle est fixé l'insert, la tige et le piston étant solidairement mobiles entre une position rétractée correspondant à la position rétractée de l'insert, et une position déployée correspondant à la position déployée de l'insert, le corps de vérin et le piston définissant conjointement, de part et d'autre du piston, une chambre primaire reliée, via un circuit fluidique primaire, à une source primaire de fluide sous une pression primaire et une chambre secondaire reliée, via un circuit fluidique secondaire, à une source secondaire de fluide sous une pression secondaire comparativement plus faible, cette unité de moulage étant caractérisée en ce que le système de boxage comprend en outre :

   ◦ au moins une électrovanne montée sur le circuit fluidique primaire, cette électrovanne comprenant une sortie fluidique reliée à la chambre primaire et définissant une section de passage variable en fonction d'un signal électrique de commande appliqué à l'électrovanne ;
   ◦ une unité de traitement reliée à l'électrovanne et programmée pour faire varier le signal électrique de commande appliqué à celle-ci.

Grâce à cette architecture, il est possible de commander précisément la position et la vitesse de déplacement du piston (et donc de l'insert), au bénéfice de la qualité du récipient produit.

Selon un mode particulier de réalisation, l'électrovanne comprend :

   ◦ un boîtier percé d'une ouverture formant la sortie fluidique reliée à la chambre primaire,
   ◦ un équipage mobile pourvu d'un noyau ferromagnétique et d'un obturateur dont la position par rapport à la sortie fluidique détermine le débit de fluide circulant au travers de celle-ci,
   ◦ un solénoïde solidaire du boîtier et entourant le noyau, ce solénoïde ayant deux bornes électriques auxquelles est appliqué le signal électrique de commande, l'unité de traitement étant programmée pour faire varier le signal électrique appliqué aux bornes du solénoïde.

L'électrovanne est avantageusement configurée pour que la section de passage de la sortie fluidique et le signal électrique de commande soient liés par la fonction suivante :

$$S = K1 . E + K2$$

où : $E$ est le signal électrique de commande
$S$ est la section de passage de la sortie fluidique
$K1$ est un coefficient (nombre réel)
$K2$ est une constante.

Le signal électrique est par exemple une intensité ou une tension électrique.

Selon un mode de réalisation, l'unité de moulage comprend un capteur apte à permettre la détermination de la position ou la vitesse de l'insert pendant son déplacement de la position rétractée à la position déployée, et l'unité de traitement est programmée pour faire varier le signal électrique de commande de l'électrovanne en fonction de la position ou de la vitesse de l'insert.

D'autres objets et avantages de l'invention apparaîtront à la lumière de la description d'un mode de réalisation, faite ci-après en référence aux dessins annexés. Dans ces dessins :

- la **FIG.1** est une section d'une unité de moulage, en position rétractée de l'insert, avant formage complet du récipient ;
- la **FIG.1A** est un détail à plus grande échelle de l'électrovanne de commande du déplacement de l'insert ;
- la **FIG.2** est une section de détail, à échelle agrandie, de l'unité de moulage de la **FIG.1,** dans une position médiane de l'insert, avec le récipient en cours de formage et avec, en médaillon, un détail à plus grande échelle de l'électrovanne ;
- la **FIG.3** est une section de détail similaire à la **FIG.2,** montrant l'unité de moulage en position déployée du fond de moule, alors que le fond du récipient est achevé ;
- la **FIG.4** est une vue similaire à la **FIG.2,** montrant l'unité de moulage dans la position rétractée du fond de moule, après formage du récipient ;
- la **FIG.5** est un diagramme comprenant deux courbes illustrant respectivement les variations de la pression dans le récipient en cours de formage dans l'unité de moulage et la position correspondante de l'insert.

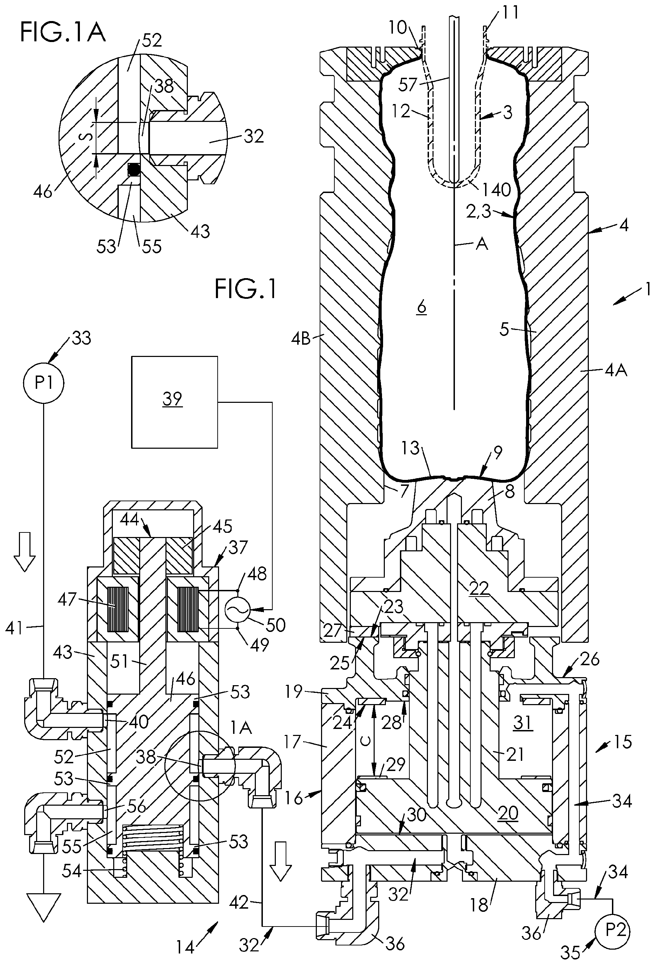

Sur les **FIG.1** à **FIG.4** est représentée une unité **1** de moulage pour la fabrication d'un récipient **2** par soufflage (ou par étirage soufflage) à partir d'une ébauche **3** en matière plastique. Dans l'exemple illustré, l'ébauche **3** est une préforme, mais il pourrait s'agir d'un récipient intermédiaire obtenu à partir d'une préforme ayant subi une ou plusieurs opérations préliminaires de formage. Selon un mode préféré de réalisation, la matière dans laquelle est réalisée l'ébauche est un PET.

L'unité **1** de moulage comprend, en premier lieu, un moule **4**.

Ce moule **4** comprend une paroi **5** formée par deux demi-moules **4A**, **4B** articulés, définissant une cavité **6** interne répartie autour d'un axe **A** principal du moule **4** qui, lorsque les récipients **2** à former sont symétriques de révolution, forme un axe de symétrie du moule **4**.

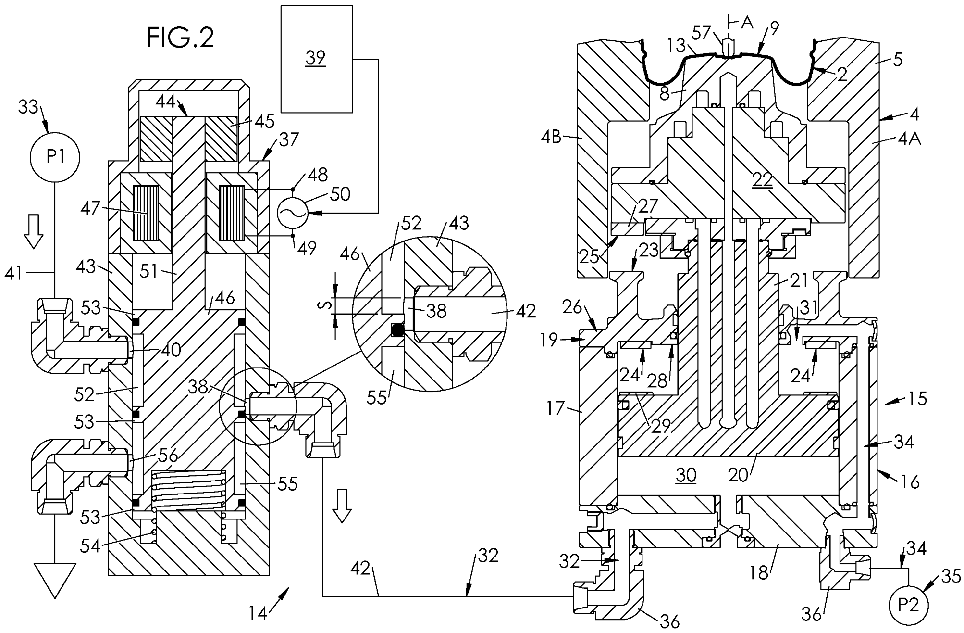

La cavité **6** définit au moins partiellement une empreinte pour une paroi latérale ou corps du récipient **2**. La paroi **5** présente une ouverture **7** définissant un passage pour un insert **8** monté mobile par rapport à la paroi **5** entre une position rétractée, illustrée sur la **FIG.1,** dans laquelle l'insert **8** est écarté de l'ouverture **7** (et s'étend donc en retrait par rapport à la cavité **6**), et une position déployée, illustrée sur la **FIG.2,** dans laquelle l'insert **8** fait au moins en partie saillie dans la cavité **6**.

Dans l'exemple illustré, l'insert **8** forme un fond de moule, complémentaire d'un fond du récipient **2** à former. Dans ce cas, l'ouverture **7** est formée dans une partie basse de la paroi **5** ; en variante, l'insert **8** pourrait être un tiroir latéral, destiné à former, sur le récipient **2**, par exemple une poignée destinée à faciliter sa prise en main. Selon un mode particulier de réalisation, l'ouverture **7** est à contour circulaire. On note **D** son diamètre intérieur.

L'insert **8** présente une surface **9** de moulage définissant une empreinte pour la partie concernée du récipient **2**. En position déployée, l'insert **8** ferme la cavité **6**, complétant ainsi l'empreinte du récipient **2**, contre laquelle est appliquée la matière lors du soufflage. On appelle « course » de l'insert **8**, notée **C**, la distance séparant la position rétractée de la position déployée. A des fins de clarté, on a représenté le moule **4** dans une configuration où la course **C** est relativement importante au regard de la hauteur du récipient **2** (typiquement d'environ 40 mm pour un récipient **2** d'une capacité de 0,5 l). Cette configuration n'est nullement limitative ; au contraire, la course **C** peut être faible au regard de la hauteur du récipient (typiquement inférieure ou égale à 15 mm pour un récipient **2** d'une capacité de 0,5 l).

Comme illustré sur la **FIG.1,** l'ébauche **3** (représentée en pointillés), puis le récipient **2** formé à partir de celle-ci, reposent sur une face supérieure du moule **4** par l'intermédiaire d'une collerette **10** de l'ébauche **3** (respectivement du récipient **2**), qui délimite un col **11** de l'ébauche **3** (respectivement du récipient **2**), maintenu hors du moule **4**. Sur la **FIG.1**, le récipient **2** n'est pas totalement formé (sa paroi extérieure n'épouse pas encore totalement la paroi **5** du moule), d'où l'emploi de la référence **2, 3** pour désigner le récipient qui est en cours de formation et n'est donc plus totalement une ébauche **3** mais pas encore un récipient **2** achevé.

Sous la collerette **10**, l'ébauche **3** (puis le récipient **2**) présente un corps **12**, qui s'étend globalement suivant la direction axiale, et un fond **13**, qui est d'abord hémisphérique (figure 1), puis, une fois formé contre l'insert **8** (**FIG.2**), s'étend globalement suivant la direction radiale à partir d'une extrémité inférieure du corps **12**. Cette configuration correspond au cas où l'insert **8** est un fond de moule.

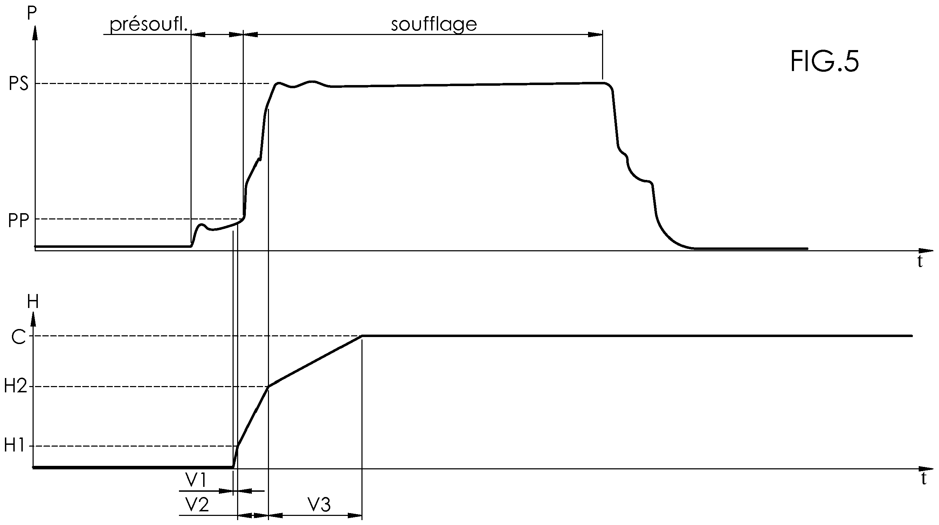

Pour former le récipient **2**, on introduit l'ébauche **3** dans le moule 4, et on injecte un fluide (de préférence un gaz, par exemple de l'air) sous pression. De manière classique, comme illustré par le diagramme supérieur de la FIG.5, le formage peut comprendre deux phases, à savoir :

- une phase de présoufflage (notée présoufl. sur la **FIG.5**), lors de laquelle on injecte dans l'ébauche **3** un fluide à une pression **PP** dite de présoufflage ; selon un mode particulier de réalisation, la pression **PP** de présoufflage est inférieure ou égale à 15 bars, et par exemple de l'ordre de 7 à 12 bars ;
- une phase de soufflage (identifiée comme telle sur la **FIG.5),** lors de laquelle on injecte dans l'ébauche **3** un fluide à une pression **PS** dite de soufflage ; selon un mode particulier de réalisation, la pression **PS** de soufflage est supérieure ou égale à 15 bars, et par exemple de l'ordre de 30 à 40 bars.

L'unité **1** de moulage comprend, en deuxième lieu, un système **14** de boxage. Le terme « boxage » est employé ici pour désigner une opération de repoussage de la matière du récipient **2** en cours de formage.

Ce système **14** de boxage comprend, premièrement, un vérin **15** de commande de la position de l'insert **8**. Ce vérin **15** comprend un corps **16** de vérin. Le corps **16** de vérin est muni d'une chemise **17** cylindrique, d'une paroi **18** inférieure et d'une paroi **19** supérieure fermant la chemise à chacune de ses extrémités. Le vérin **15** comprend également un piston **20**, monté coulissant dans le corps **16** de vérin. Plus précisément, le piston **20** est monté coulissant dans la chemise **17**, entre les parois **18**, **19**.

Comme cela est visible sur les **FIG.1** à **FIG.4**, le vérin **15** comprend en outre une tige **21** solidaire du piston **20**. Cette tige traverse, de manière étanche, la paroi **19** supérieure au travers d'une ouverture complémentaire ménagée dans celle-ci.

L'insert **8** est fixé sur la tige **21**. Plus précisément, dans l'exemple illustré, l'insert est fixé sur la tige **21** à une extrémité supérieure de celle-ci faisant saillie hors du corps **16** de vérin, par l'intermédiaire d'une sellette **22**. La fixation de l'insert **8** sur la sellette **22** (de même que celle de la sellette **22** sur la tige **21**) peut être réalisée de manière classique, par exemple par vissage.

Le piston **20** et la tige **21** sont solidairement mobiles par rapport au corps **16** de vérin entre une position rétractée, correspondant à la position rétractée de l'insert **8** (**FIG.1**), et une position déployée, correspondant à la position déployée de l'insert **8** (**FIG.2**).

L'unité **1** de moulage comprend deux butées définissant les positions extrêmes de l'insert **8**, à savoir :

- une première butée **23**, dite butée **23** basse, de fin de course définissant la position rétractée de l'insert **8**, laquelle position rétractée est une position basse dans le mode de réalisation, d'où son appellation et
- une deuxième butée **24**, dite butée **24** haute, de fin de course, définissant la position déployée de l'insert **8**, laquelle position déployée est une position haute dans le mode de réalisation, d'où, là encore, l'appellation de butée haute.

Les butées **23**, **24** peuvent être agencées pour venir en contact directement avec l'insert **8**, ou encore avec le piston **20**.

Selon un mode de réalisation, la butée **23** basse est disposée en regard d'une face **25** inférieure d'appui de l'insert **8**, pour un contact avec celle-ci en position rétractée.

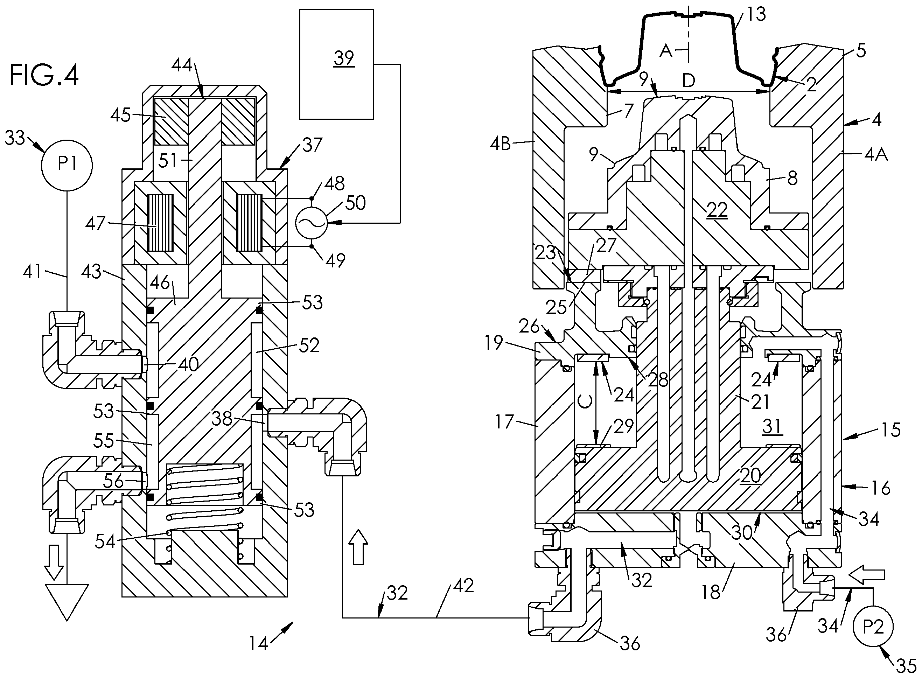

Ainsi, dans l'exemple illustré, la butée **23** basse est formée du côté d'une face **26** externe de la paroi **19** supérieure. Plus précisément, comme illustré sur la **FIG.4**, la butée **23** basse est formée par une face d'extrémité axiale d'une bague annulaire formée en saillie sur la paroi **19** supérieure à partir de la face **26** externe de celle-ci.

Comme cela est visible sur la **FIG.4**, la face **25** inférieure d'appui de l'insert **8** peut être formée par un ou plusieurs tampons **27** rapportés, qui peuvent, outre la fonction de butée, procurer une fonction d'amortissement contribuant au silence de fonctionnement de l'unité **1** de moulage.

Par ailleurs, la butée **24** haute peut quant à elle être disposée en regard du piston **20**, pour un contact avec celui-ci en position déployée.

Ainsi, dans l'exemple illustré, la butée **24** haute est formée du côté d'une face **28** interne de la paroi **19** supérieure. Plus précisément, comme illustré sur la **FIG.4**, la butée **24** haute est formée par une cale annulaire solidaire de la paroi **19** supérieure. Pour limiter l'usure du piston **20** au contact de la butée **24** haute, celui-ci peut porter une rondelle **29** qui vient s'appliquer contre la butée **24** haute en position déployée.

Comme on le voit bien sur les **FIG.2** et **FIG.4**, le corps **16** et le piston **20** définissent conjointement, de part et d'autre du piston **20**, deux chambres fluidiques, à savoir une chambre **30** primaire et une chambre **31** secondaire.

Dans l'exemple illustré, la chambre **30** primaire est délimitée par le piston **20** et la paroi **18** inférieure. La chambre **31** secondaire est délimitée par le piston **20** et la paroi **19** supérieure.

Le système de boxage comprend, deuxièmement, un circuit fluidique de commande du déplacement du piston **20**. Ce circuit fluidique comprend :

- un circuit **32** fluidique primaire par lequel la chambre **30** primaire peut être reliée à une source **33** primaire de fluide (air, eau, huile, etc.) sous une pression **P1** primaire, et
- un circuit **34** fluidique secondaire par lequel la chambre **31** secondaire est reliée à une source **35** secondaire de fluide (air, eau, huile) sous une pression **P2** secondaire comparativement plus faible (c'est-à-dire plus faible que la pression **P1** primaire).

La pression **P1** primaire est avantageusement supérieure ou égale à 10 bars, et de préférence égale (ou environ égale) à 25 bars. Rappelant que la pression **PS** de soufflage peut atteindre 40 bars, on note que la pression **P1** primaire, nécessaire au boxage, peut donc être inférieure à la pression **PS** de soufflage tout en permettant d'assurer un boxage correct : ceci est possible en jouant sur les dimensions du vérin. Il suffit que la surface du piston soit supérieure à la surface de l'insert ou du fond à boxer, et que la pression **P1** soit choisie de façon telle que les forces exercées par l'insert sur le fond excèdent celles exercées par l'intérieur du récipient **2**. Selon un mode de réalisation particulier, où la pression **PS** de soufflage est égale (ou environ égale) à 25 bars, la source **33** primaire peut être confondue avec la source où est puisé le fluide avec lequel est conduite la phase de soufflage. La pression **P1** primaire et la pression **PS** de soufflage peuvent donc être différentes ; il est en effet possible de les régler à des valeurs différentes (selon leurs besoins respectifs) au moyen de détendeurs distincts.

Par ailleurs, la pression **P2** secondaire est avantageusement inférieure ou égale à 10 bars, et de préférence égale (ou environ égale) à 7 bars.

Comme on le voit bien sur les **FIG.1** à **FIG.4**, le circuit **32** fluidique primaire est partiellement formé dans la paroi **18** inférieure ; quant au circuit **34** fluidique secondaire, il est partiellement formé dans la paroi **18** inférieure, dans la chemise **17** et dans la paroi **19** supérieure. Le raccord des portions des circuits **32, 34** formées dans la paroi **18** inférieure à des tubulures d'amenée du fluide peut être réalisé, comme dans l'exemple illustré, au moyen de connecteurs **36** rapportés et vissés sur la paroi **18** inférieure.

Afin de commander la position et la vitesse de déplacement du piston **20** (et donc de l'insert **8**), et comme illustré sur les **FIG.1** à **FIG.4,** le système **14** de boxage comprend une électrovanne **37,** montée sur le circuit **32** fluidique primaire. Cette électrovanne **37** comprend une sortie **38** fluidique, qui est reliée à la chambre **30** primaire et qui définit une section **S** de passage qui est variable en fonction d'un signal $E$ électrique de commande appliqué à l'électrovanne **37.**

Le système **14** de boxage comprend, en outre, une unité **39** de traitement programmable, reliée à l'électrovanne **37** et programmée pour faire varier le signal $E$ électrique de commande appliqué à celle-ci.

Plus précisément, et comme illustré sur les **FIG.1** à **FIG.4,** l'électrovanne **37** comprend, outre la sortie **38,** une entrée **40** fluidique par laquelle l'électrovanne **37** est raccordée à la source **33** primaire, via un conduit **41** schématisé par un trait sur les **FIG.1** à **FIG.4**. De même, la sortie **38** fluidique est reliée à la chambre **30** primaire (via un connecteur **36**) par un conduit **42** schématisé par un trait sur les **FIG.1** à **FIG.4.**

Selon un mode de réalisation illustré sur les dessins, l'électrovanne **37** est à commande électromagnétique et elle comprend :

    ◦ un boîtier **43** percé d'une ouverture (formant la sortie **38** fluidique) reliée à la chambre **30** primaire,
    ◦ un équipage **44** mobile pourvu d'un noyau **45** ferromagnétique et d'un obturateur **46** dont la position par rapport à la sortie **38** fluidique détermine le débit de fluide circulant au travers de celle-ci,
    ◦ un solénoïde **47** solidaire du boîtier **43** et entourant le noyau **45,** ce solénoïde **47** ayant deux bornes **48, 49** électriques auxquelles est appliqué le signal électrique de commande, l'unité **39** de traitement étant programmée pour faire varier le signal $E$ électrique appliqué aux bornes **48, 49** du solénoïde via un générateur **50.**

Le signal $E$ électrique peut être un courant. Dans ce cas, le générateur **50** est un générateur de courant à commande variable, piloté par l'unité **39** de traitement.

En variante, le signal $E$ électrique est une tension. Dans ce cas, le générateur **50** est un générateur de tension à commande variable, piloté par l'unité **39** de traitement.

L'unité **39** de traitement peut être un processeur (CPU - Central processing unit) intégré à un système informatique classique (serveur ou ordinateur personnel) ou à un automate programmable industriel (API).

Dans l'exemple illustré sur les **FIG.1** à **FIG.4**, le noyau **45** est solidaire de l'obturateur **46** par l'intermédiaire d'une tige **51.** L'obturateur **46** comprend, dans cet exemple, au moins une restriction de diamètre, délimitée par deux collerettes **53** en contact glissant étanche avec une paroi interne du boîtier **43**, et qui définit avec cette paroi une chambre **52** de mise en pression dans laquelle débouche(nt) la sortie **38** fluidique et/ou l'entrée **40** fluidique.

Comme on le voit sur les **FIG.1** à **FIG.4**, l'électrovanne **37** est pourvue d'un ressort **54** de rappel interposé entre le boîtier **43** et l'obturateur **46.**

Lorsque le solénoïde **47** est alimenté en électricité (par une mise sous tension ou une circulation forcée de courant), il génère un champ électrique qui déplace le noyau **45** ferromagnétique à l'encontre du ressort **54** de rappel.

Selon un exemple de réalisation illustré sur les dessins, l'obturateur **46** comprend une seconde restriction de diamètre délimitée par deux collerettes **53** en contact glissant étanche avec la paroi interne du boîtier **43,** et qui définit avec cette paroi une chambre **55** de dégazage. Par ailleurs, le boîtier **43** est percé d'une autre ouverture qui définit une évacuation **56** raccordée à la pression atmosphérique.

L'équipage mobile est monté entre deux positions extrêmes, à savoir :

- une position ouverte, illustrée sur la **FIG.1**, dans laquelle la sortie **38** fluidique et l'entrée **40** fluidique débouchent toutes deux pleinement (dans ce cas, la section S est maximale) dans la chambre **52** de mise en pression, ce qui met la chambre **30** primaire en communication fluidique avec la source **33** primaire, et
- une position de dégazage, illustrée sur la **FIG.4**, dans laquelle la sortie **38** fluidique et l'évacuation **56** débouchent toutes deux pleinement dans la chambre **55** de dégazage, ce qui met la chambre **30** primaire en communication avec l'atmosphère.

L'électrovanne **37** est configurée pour que la section $S$ de passage de la sortie **38** fluidique et le signal $E$ électrique de commande soient liés par la fonction suivante :

$$S = K1.E + K2$$

où $K1$ est un coefficient (un nombre réel, de préférence strictement positif) et $K2$ une constante.

On voit que la fonction qui lie le signal $E$ électrique de commande à la section $S$ de passage est une loi proportionnelle. On nomme « coefficient de proportionnalité » le coefficient $K1$.

En pratique, la force (intensité ou tension) du signal $E$ électrique détermine, via le noyau **45** soumis au champ électromagnétique généré par le solénoïde, la position de l'obturateur **46** dont l'une des collerettes **53** obture plus ou moins (jusqu'à obturer complètement ou ne pas obturer du tout) la sortie **38** fluidique, et détermine ainsi la section $S$ de passage.

On notera que le débit (ou la pression) de fluide immédiatement en aval de la sortie **38** fluidique n'est pas nécessairement dans un lien de proportionnalité au signal $E$ électrique de commande, car ce débit (respectivement cette pression) dépend des conditions fluidiques dans la chambre **30** primaire, lesquelles dépendent en partie des efforts résistants subis par le piston **20**, qui résultent pour leur part de la pression régnant dans la chambre **31** secondaire, laquelle s'applique directement sur le piston **20**, et de la pression régnant dans l'ébauche **3**, qui s'applique sur le piston **20** via l'insert **8** et la tige **21**.

Cependant, il n'est pas nécessaire que ce débit ou cette pression soit dans une telle relation de proportionnalité au signal $E$ électrique pour que la position ou la vitesse du piston **20** (et donc l'insert **8**) soit finement réglée par l'unité **39** de traitement via l'électrovanne **37**.

En effet, il est envisageable d'implémenter dans le système **14** de boxage une boucle de rétroaction permettant de commander la valeur (ou la force) du signal $E$ électrique en fonction d'une mesure de la position ou de la vitesse réelle de l'insert **8** (ou, ce qui revient au même, du piston **20**).

A cet effet, le système **14** de boxage peut être équipé d'un capteur apte à mesurer (ou à permettre de déterminer par calcul) la position ou la vitesse de l'insert **8** pendant son déplacement de sa position rétractée à sa position déployée. Dans ce cas, l'unité **39** de traitement est programmée pour faire varier le signal $E$ électrique de commande de l'électrovanne **37** en fonction de divers paramètres comprenant notamment la position ou la vitesse de l'insert **8** (ainsi déterminée), par référence à une courbe de soufflage de référence **(FIG.5)** mémorisée dans l'unité **39** de traitement.

Il a été découvert qu'il est possible de correctement former l'empreinte de l'insert **8** (en l'espèce le fond **13** du récipient **2**) en maîtrisant correctement la vitesse de déplacement de l'insert **8**.

De fait, on a pu établir un lien de cause à effet entre des variations importantes dans la vitesse de déplacement de l'insert **8** (cause) et des disparités dans la qualité des récipients produits (effet).

Ces disparités sont dues au fait que les variations importantes dans la pression régnant dans le récipient **2** en cours de formation, et la disparité des temps de réponse des électrovannes d'un poste de formage à l'autre, amplifient l'incidence des écarts d'accélération ou de ralentissement de l'insert **8** sur la prise d'empreinte d'un récipient **2** à l'autre.

Si les systèmes connus ne permettent pas de maîtriser correctement la vitesse de déplacement de l'insert **8**, le présent système **14** de boxage permet, en revanche, de s'approcher de cet objectif. A cet effet, on commande le déplacement de l'insert **8** en trois phases :

- dans une première phase, au début de la course de l'insert **8** (c'est-à-dire du piston **20**), au départ de la position rétractée, le débit d'alimentation en fluide de la chambre **30** primaire est élevé sur un court intervalle de temps, de sorte à conférer à l'insert **8** une vitesse (et donc une inertie) importante en profitant de ce que l'effort résistant opposé par l'ébauche **3** en cours de formage est faible ou nul **(FIG.1)** ;

- dans une deuxième phase, et jusqu'à une position médiane de l'insert **8** (typiquement à environ mi-course), le débit d'alimentation en fluide de la chambre **30** primaire est réduit, pour réduire la vitesse de déplacement de l'insert **8** et permettre à la matière de l'ébauche **3** de se déployer sur l'insert **8** en prenant correctement son empreinte **(FIG.2)**, tout en profitant de l'inertie acquise par l'insert **8** durant la première phase ;

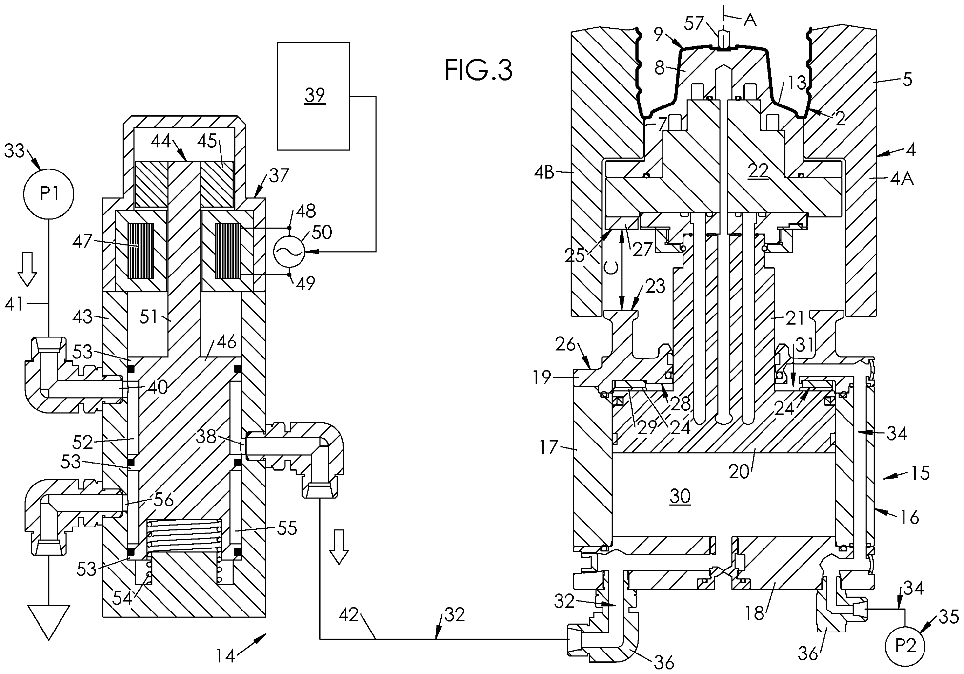

- dans un troisième temps, à partir de la position intermédiaire et jusqu'à la position déployée - c'est-à-dire la fin de course - de l'insert **8** (et donc du piston **20**), le débit d'alimentation en fluide de la chambre **30** primaire est relevé, car l'effort résistant opposé par l'ébauche **3** en fin de formage est plus élevé et il convient que l'insert **8** puisse le vaincre pour atteindre sa fin de course **(FIG.3)**.

Plus précisément, dans la première phase, et depuis la position rétractée de l'insert **8**, le signal $E$ électrique est réglé par l'unité **39** de traitement à une valeur élevée (typiquement d'un indice de 9 sur une échelle comprenant 10 graduations), ce qui place l'obturateur **46** dans une position basse dans laquelle la section $S$ est importante voire maximale. Il en résulte un débit et une pression de fluide élevés (comme indiqué par les flèches blanches sur la **FIG.1**). Comme l'effort résistant opposé par l'ébauche **3** en cours de formage est relativement faible, le piston **20** (qui est lié à l'insert) est déplacé rapidement, à une vitesse notée **V1** sur le diagramme inférieur de la **FIG.5**. Cette première phase, initiée pendant le présoufflage et alors que celui-ci tire à sa fin, dure quelques millisecondes (notamment entre 10 et 20 ms). A la fin de cette première phase, l'insert a atteint une hauteur notée **H1** sur le diagramme inférieur de la **FIG.5**. Sur la **FIG.5**, est illustré le cas où la hauteur **H1** est atteinte avant la fin de la phase de présoufflage, ce qui est généralement le cas, mais il est important de noter que, selon l'inertie du piston **20** et de l'insert **8**, cette hauteur pourrait être atteinte ultérieurement, notamment à la fin du présoufflage, voire après le commencement du soufflage.

Dans la deuxième phase, le signal *E* électrique est réglé par l'unité **39** de traitement à une valeur plus faible (typiquement d'un indice de 2 sur une échelle comprenant 10 graduations), ce qui place l'obturateur **46** dans une position intermédiaire dans laquelle la section *S* est restreinte (**FIG.2**), avec, pour conséquence, un débit de fluide bas. Il en résulte une diminution de la vitesse de déplacement (notée **V2** sur le diagramme inférieur de la **FIG.5**) de l'insert **8**, d'autant que la résistance opposée par l'ébauche **3** s'accroît. Cependant, l'inertie acquise par l'insert **8** en raison de sa vitesse élevée lors de la première phase (à la vitesse **V1**) permet de minimiser le temps de réponse de l'insert **8** après la variation (et plus précisément la diminution) du débit imposé par l'unité **39** de traitement. La brève impulsion donnée à l'insert **8** pendant la première phase permet de le rendre insensible aux variations importantes de pression régnant dans le récipient **2** (comme on peut le voir sur la courbe de soufflage, en haut sur la **FIG.5**) lorsqu'est commandé son déplacement à la vitesse **V2**.

Cette deuxième phase, sensiblement plus longue que la première, est initiée après que la hauteur **H1** ait été atteinte (c'est-à-dire, on le rappelle, un événement qui peut survenir avant la fin de la phase de présoufflage, ou ultérieurement, notamment à la fin du présoufflage, voire après le commencement du soufflage) et s'achève après le début du soufflage. Sa durée est par exemple d'environ 50 ms. A la fin de la deuxième phase, l'insert a atteint une hauteur notée **H2** sur le diagramme inférieur de la **FIG.5.**

Dans la troisième phase, le signal *E* électrique est réglé par l'unité **39** de traitement à une valeur supérieure à celle de la deuxième phase (typiquement d'un indice de 7 sur une échelle comprenant 10 graduations), ce qui place l'obturateur **46** sensiblement dans la même position basse que dans la première phase, dans laquelle la section *S* est importante. Il en résulte un débit et une pression de fluide élevé (comme indiqué par les flèches blanches sur la **FIG.3**). Comme l'effort résistant opposé par l'ébauche **3** en cours de formage est élevé, la vitesse de déplacement (notée **V3** sur le diagramme inférieur de la **FIG.5**) subit, en pratique, une diminution par rapport à la première et la deuxième phase mais l'importance de l'effort moteur appliqué à l'insert **8** par la pression élevée régnant dans la chambre **30** primaire permet à celui-ci d'atteindre sa position déployée, au bénéfice d'une bonne prise d'empreinte du fond **13** du récipient **2**.

On a illustré sur la courbe supérieure de la **FIG.5** les variations de pression dans l'ébauche **3** lors du formage de celle-ci.

A partir d'une pression (relative) nulle, on injecte dans l'ébauche **3** préalablement chauffée à une température supérieure à sa température de transition vitreuse (laquelle est d'environ 80°C dans le cas du PET) un fluide (tel que de l'air) à la pression **PP** de présoufflage, pendant la phase dite de présoufflage. L'insert **8** (avec le piston **20**) est alors dans sa position rétractée.

L'électrovanne **37** est alors en position rétractée, la chambre **30** primaire étant en communication fluidique avec l'air libre via la chambre **55** de dégazage et l'évacuation **56** ; la pression régnant dans la chambre **31** secondaire, égale à celle de la source **35** secondaire (qui peut être confondue avec la source de pression **PP** de présoufflage), maintient le piston **20** (et l'insert **8**) en position rétractée.

Tandis que la phase de présoufflage tire à sa fin, l'unité **39** de traitement règle le signal *E* électrique à une première valeur *E1* élevée, qui, via le solénoïde **47** et le noyau **45**, règle la section *S* à une valeur importante ou faible, ce qui entraîne le déplacement du piston **20** (avec l'insert **8**) à la première (et grande) vitesse **V1**, jusqu'à ce que la première hauteur **H1** soit atteinte.

On notera que le déplacement de l'insert **8** (opération dénommée boxage), est destiné à conférer à la matière, outre la forme souhaitée, un surcroît de taux de déformation favorable à l'orientation des molécules (et donc à la rigidité), ainsi qu'à une bonne prise d'empreinte.

Puis après l'atteinte de la hauteur **H1**, et généralement jusqu'à un instant survenant après le début du soufflage, qui consiste à injecter dans le récipient un fluide (ici de l'air) à la pression **PS** de soufflage, l'unité **39** de traitement règle le signal *E* électrique à une deuxième valeur *E2*, comparativement plus faible (*E2<E1*), ce qui, via le solénoïde **47** et le noyau **45**, règle la section *S* à une valeur intermédiaire et provoque le déplacement du piston **20** (avec l'insert **8**) à une vitesse **V2** plus faible (**V2<V1**), jusqu'à la position médiane (hauteur **H2**).

Alors que la pression dans le récipient **2** en cours de formage atteint la pression **PS** de soufflage, l'unité **39** de traitement règle le signal *E* électrique à une troisième valeur *E3*, comparativement plus élevée que *E2* (*E3>E2*) ce qui, via le solénoïde **47** et le noyau **45**, règle la section *S* à une valeur importante et, compte tenu de la résistance opposée par le récipient **2**, entraîne le déplacement du piston **20** (avec l'insert **8**) à une vitesse **V3** comparativement plus faible (**V3<V2**), jusqu'à la fin de course (hauteur **C**).

Bien que la vitesse de déplacement de l'insert **8** soit réduite en fin de course, l'effort moteur exercé sur l'insert par le piston **20** est suffisant pour le déplacer sans qu'il ne soit arrêté par l'effort résistant opposé par la pression régnant dans le récipient **2**. Si la pression **P1** issue de la source 33 primaire est égale à la pression de soufflage, il doit néanmoins être veillé à ce que la surface projetée d'appui du récipient **2** sur l'insert **8** (qui correspond, dans l'exemple illustré, à la section de l'ouverture **7**, soit $\pi D^2/4$) soit inférieure à la surface du piston **20** délimitant la chambre **30** primaire. En pratique, la surface du fond **13** du récipient projetée sur un plan horizontal (perpendiculaire à l'axe de déplacement du piston **20**) est toujours inférieure à 40% environ de la surface motrice du piston **20** (c'est-à-dire la surface du piston **20** délimitant la chambre **30** primaire). C'est grâce à cette conception que la pression **P1** peut être inférieure à la pression de soufflage tout en assurant une course totale du piston **20**.

On notera que le formage par présoufflage et soufflage peut être complété, de façon connue, par un étirage axial de l'ébauche **3** au moyen d'une tige **57** d'étirage mobile suivant la direction axiale, qui entraîne le fond **140** de l'ébauche **3**.

Notons pour finir que l'unité **39** peut être programmée pour faire varier le signal électrique de commande de l'électrovanne **37** en fonction de paramètres supplémentaires, parmi :

- la section transversale de l'insert **8** (correspondant à la surface projetée du fond **13** du récipient **2** qui s'oppose au mouvement de l'insert **8**) ;
- la chronologie du cycle de formage (incluant les instants auxquels sont commandés le présoufflage, le soufflage, la récupération) ;
- la chronologie du boxage (incluant l'instant auquel est commandé le déplacement de l'insert **8** à partir de sa position rétractée) ;
- la pression **PS** de soufflage ;
- la course de boxage.

**Revendications**

1. Unité (**1**) de moulage pour la fabrication d'un récipient (**2**) à partir d'une ébauche (**3**) en matière plastique, cette unité (**1**) de moulage comprenant :

   - un moule (**4**) muni d'une paroi (**5**) définissant une cavité (**6**) à l'empreinte du récipient (**2**) et d'un insert (**8**) mobile par rapport à la paroi (**5**) entre une position rétractée, dans laquelle il s'étend en retrait par rapport à la cavité (**6**), et une position déployée, dans laquelle il fait au moins en partie saillie dans la cavité (**6**) ;
   - au moins un système (**14**) de boxage comprenant un vérin (**15**) pourvu d'un corps (**16**) de vérin, d'un piston (**20**) et d'une tige (**21**) solidaire du piston (**20**) et sur laquelle est fixé l'insert (**8**), la tige (**21**) et le piston (**20**) étant solidairement mobiles entre une position rétractée correspondant à la position rétractée de l'insert (**8**), et une position déployée correspondant à la position déployée de l'insert (**8**), le corps (**16**) de vérin et le piston (**20**) définissant conjointement, de part et d'autre du piston (**20**), une chambre (**30**) primaire reliée, via un circuit (**32**) fluidique primaire, à une source (**33**) primaire de fluide sous une pression (**P1**) primaire et une chambre (**31**) secondaire reliée, via un circuit (**34**) fluidique secondaire, à une source (**35**) secondaire de fluide sous une pression (**P2**) secondaire comparativement plus faible,

cette unité (**1**) de moulage étant **caractérisée en ce que** le système (**14**) de boxage comprend :

   - au moins une électrovanne (**37**) montée sur le circuit (**32**) fluidique primaire, cette électrovanne (**37**) comprenant une sortie (**38**) fluidique reliée à la chambre (**30**) primaire et définissant une section (*S*) de passage variable en fonction d'un signal (*E*) électrique de commande appliqué à l'électrovanne (**37**) ;
   - une unité (**39**) de traitement reliée à l'électrovanne (**37**) et programmée pour faire varier le signal (*E*) électrique de commande appliqué à celle-ci.

2. Unité (**1**) de moulage selon la revendication 1, **caractérisée** :

   - **en ce que** l'électrovanne (**37**) comprend :

      ◦ un boîtier (**43**) percé d'une ouverture formant la sortie (**38**) fluidique reliée à la chambre (**30**) primaire,
      ◦ un équipage (**44**) mobile pourvu d'un noyau (**45**) ferromagnétique et d'un obturateur (**46**) dont la position par rapport à la sortie (**38**) fluidique détermine le débit de fluide circulant au travers de celle-ci,
      ◦ un solénoïde (**47**) solidaire du boîtier (**43**) et entourant le noyau (**45**), ce solénoïde (**47**) ayant deux bornes (**48**, **49**) électriques auxquelles est appliqué le signal électrique (*E*) de commande ;

   - et **en ce que** l'unité (**39**) de traitement est programmée pour faire varier le signal (*E*) électrique appliqué aux bornes (**48**, **49**) du solénoïde (**47**).

3. Unité (**1**) de moulage selon la revendication 1 ou la revendication 2, **caractérisée en ce que** l'électrovanne (**37**) est configurée pour que la section (*S*) de passage de la sortie (**38**) fluidique et le signal (*E*) électrique de commande soient liés par la fonction suivante :

$$S = K1 . E + K2$$

où : *E* est le signal électrique de commande
*S* est la section de passage de la sortie fluidique
*K1* est un coefficient (nombre réel)
*K2* est une constante.

4. Unité (**1**) de moulage selon l'une des revendications précédentes, **caractérisée en ce que** le signal (*E*) électrique est une intensité électrique.

5. Unité (**1**) de moulage selon l'une des revendications 1 à 3, **caractérisée en ce que** le signal (*E*) électrique est une tension électrique.

6. Unité (**1**) de moulage selon l'une des revendications précédentes, **caractérisée en ce qu'**elle comprend un capteur apte à permettre la détermination de la position ou la vitesse de l'insert (**8**) pendant son déplacement de la position rétractée à la position déployée, et **en ce que** l'unité (**39**) de traitement est programmée pour faire varier le signal électrique de commande de l'électrovanne (**37**) en fonction de la position ou de la vitesse de l'insert (**8**).

7. Unité (**1**) de moulage selon la revendication 6, **caractérisée en ce que** l'unité (**39**) de traitement est programmée pour faire varier le signal électrique de commande de l'électrovanne (**37**) en fonction de paramètres supplémentaires choisis parmi :

     - la section transversale de l'insert (**8**) ;
     - la chronologie du cycle de formage ;
     - la chronologie du boxage ;
     - la pression (**PS**) de soufflage ;
     - la course de boxage.

**Patentansprüche**

1. Formgebungseinheit (1) zur Herstellung eines Behälters (2) ausgehend von einem Rohling (3) aus Kunststoff, wobei diese Formgebungseinheit (1) enthält:

     - ein Formwerkzeug (4), das mit einer Wand (5), die einen Hohlraum (6) mit der Prägung des Behälters (2) definiert, und mit einem Einsatz (8) versehen ist, der bezüglich der Wand (5) zwischen einer eingezogenen Stellung, in der er sich bezüglich des Hohlraums (6) zurückversetzt erstreckt, und einer ausgezogenen Stellung beweglich ist, in der er zumindest zum Teil in den Hohlraum (6) vorsteht;
     - mindestens ein Treibsystem (14), das einen Arbeitszylinder (15) enthält, der mit einem Zylinderkörper (16), einem Kolben (20) und einer Stange (21) versehen ist, die fest mit dem Kolben (20) verbunden ist und an der der Einsatz (8) befestigt ist, wobei die Stange (21) und der Kolben (20) fest miteinander verbunden zwischen einer eingezogenen Stellung, die der eingezogenen Stellung des Einsatzes (8) entspricht, und einer ausgezogenen Stellung beweglich sind, die der ausgezogenen Stellung des Einsatzes (8) entspricht, wobei der Zylinderkörper (16) und der Kolben (20) zusammen zu beiden Seiten des Kolbens (20) eine Primärkammer (30), die über einen Primärfluidkreislauf (32) mit einer Primärfluidquelle (33) unter einem Primärdruck (P1) verbunden ist, und eine Sekundärkammer (31) definieren, die über einen Sekundärfluidkreislauf (34) mit einer Sekundärfluidquelle (35) unter einem vergleichsweise geringeren Sekundärdruck (P2) verbunden ist,

wobei diese Formgebungseinheit (1) **dadurch gekennzeichnet ist, dass** das Treibsystem (14) enthält:

     - mindestens ein Elektroventil (37), das auf den Primärfluidkreislauf (32) montiert ist, wobei dieses Elektroventil (37) einen Fluidausgang (38) enthält, der mit der Primärkammer (30) verbunden ist und einen Durchgangsquerschnitt (S) definiert, der abhängig von einem elektrischen Steuersignal (E) variabel ist, das an das Elektroventil (37) angelegt wird;
     - eine Verarbeitungseinheit (39), die mit dem Elektroventil (37) verbunden und programmiert ist, das an dieses angelegte elektrische Steuersignal (E) zu variieren.

2. Formgebungseinheit (1) nach Anspruch 1, **dadurch gekennzeichnet:**

     - **dass** das Elektroventil (37) enthält:

         o ein Gehäuse (43), das von einer Öffnung durchbohrt ist, die den mit der Primärkammer (30) verbundenen Fluidausgang (38) bildet,
         o ein bewegliches Teil (44), das mit einem ferromagnetischen Kern (45) und mit einer Verschlussvorrichtung (46) versehen ist, deren Stellung bezüglich des Fluidausgangs (38) den Fluiddurchsatz bestimmt, der durch diesen strömt,
         o eine Magnetspule (47), die fest mit dem Gehäuse (43) verbunden ist und den Kern (45) umgibt, wobei diese Magnetspule (47) zwei elektrische Anschlüsse (48, 49) hat, an die das elektrische Steuersignal (E) angelegt wird;

     - und **dass** die Verarbeitungseinheit (39) programmiert ist, um das an die Anschlüsse (48, 49) der Magnetspule (47) angelegte elektrische Signal (E) zu variieren.

3. Formgebungseinheit (1) nach Anspruch 1 oder Anspruch 2, **dadurch gekennzeichnet, dass** das Elektroventil (37) konfiguriert ist, damit der Durchgangsquerschnitt (S) des Fluidausgangs (38) und

EP 3 470 203 B1  20

das elektrische Steuersignal (E) durch die folgende Funktion verbunden sind:

$$S=K1.E+K2$$

wobei:

E das elektrische Steuersignal ist
S der Durchgangsquerschnitt des Fluidausgangs ist
K1 ein Koeffizient ist (reelle Zahl)
K2 eine Konstante ist.

4. Formgebungseinheit (1) nach einem der vorhergehenden Ansprüche, **dadurch gekennzeichnet, dass** das elektrische Signal (E) eine elektrische Stromstärke ist.

5. Formgebungseinheit (1) nach einem der Ansprüche 1 bis 3, **dadurch gekennzeichnet, dass** das elektrische Signal (E) eine elektrische Spannung ist.

6. Formgebungseinheit (1) nach einem der vorhergehenden Ansprüche, **dadurch gekennzeichnet, dass** sie einen Sensor enthält, der die Bestimmung der Stellung oder die Geschwindigkeit des Einsatzes (8) während seiner Verschiebung von der eingezogenen Stellung in die ausgezogene Stellung erlauben kann, und dass die Verarbeitungseinheit (39) programmiert ist, um das elektrische Steuersignal des Elektroventils (37) abhängig von der Stellung oder der Geschwindigkeit des Einsatzes (8) zu variieren.

7. Formgebungseinheit (1) nach Anspruch 6, **dadurch gekennzeichnet, dass** die Verarbeitungseinheit (39) programmiert ist, um das elektrische Steuersignal des Elektroventils (37) abhängig von zusätzlichen Parametern zu variieren, die ausgewählt werden unter:

   - dem Querschnitt des Einsatzes (8);
   - der Chronologie des Formgebungszyklus;
   - der Chronologie des Treibens;
   - dem Blasdruck (PS);
   - dem Treibhub.

**Claims**

1. Moulding unit (1) for manufacturing a container (2) from a part-finished form (3) made of plastic, this moulding unit (1) comprising:

   - a mould (4) equipped with a wall (5) defining a cavity (6) in the impression of the container (2) and with an insert (8) able to move with respect to the wall (5) between a retracted position, in which it is retracted with respect to the cavity (6), and a deployed position, in which it projects at least partially into the cavity (6);
   - at least one boxing system (14) comprising a ram (15) provided with a ram body (16), with a piston (20) and with a rod (21) rigidly attached to the piston (20) and to which the insert (8) is fixed, the rod (21) and the piston (20) being able to move as one between a retracted position corresponding to the retracted position of the insert (8), and a deployed position corresponding to the deployed position of the insert (8), the ram body (16) and the piston (20) jointly defining, one on each side of the piston (20), a primary chamber (30) connected, via a primary fluidic circuit (32), to a primary source (33) of fluid at a primary pressure (P1), and a secondary chamber (31) connected, via a secondary fluidic circuit (34), to a secondary source (35) of fluid at a secondary pressure (P2) that is comparatively lower,

this moulding unit (1) being **characterized in that** the boxing system (14) comprises:

   - at least one electrically-operated valve (37) mounted on the primary fluidic circuit (32), this electrically-operated valve (37) comprising a fluidic outlet (38) connected to the primary chamber (30) and defining a bore section (S) that can vary according to an electric control signal (E) applied to the electrically-operated valve (37);
   - a processing unit (39) connected to the electrically-operated valve (37) and programmed to cause the electric control signal (E) applied thereto to vary.

2. Moulding unit (1) according to Claim 1, **characterized:**

   - **in that** the electrically-operated valve (37) comprises:

     ○ a housing (43) pierced with an opening forming the fluidic outlet (38) connected to the primary chamber (30),
     ○ moving gear (44) provided with a ferromagnetic core (45) and with a shutoff member (46) of which the position with respect to the fluidic outlet (38) determines the delivery of fluid circulating through this outlet,
     ○ a solenoid (47) secured to the housing (43) and surrounding the core (45), this solenoid (47) having two electric terminals (48, 49) to which the electric control signal (E) is applied;

- and **in that** the processing unit (39) is programmed to cause the electric signal (*E*) applied to the terminals (48, 49) of the solenoid (47) to vary.

3. Moulding unit (1) according to Claim 1 or Claim 2, **characterized in that** the electrically-operated valve (37) is configured so that the bore section (*S*) of the fluidic outlet (38) and the electric control signal (*E*) are linked by the following function:

$$S = K1 . E + K2$$

where: *E* is the electric control signal
*S* is the bore section of the fluidic outlet
*K1* is a coefficient (real number)
*K2* is a constant.

4. Moulding unit (1) according to one of the preceding claims, **characterized in that** the electric signal (*E*) is an electric current strength.

5. Moulding unit (1) according to one of Claims 1 to 3, **characterized in that** the electric signal (*E*) is an electric voltage.

6. Moulding unit (1) according to one of the preceding claims, **characterized in that** it comprises a sensor able to make it possible to determine the position or the speed of the insert (8) as it moves from the retracted position to the deployed position, and **in that** the processing unit (39) is programmed to cause the electric control signal for controlling the electrically-operated valve (37) to vary according to the position or the speed of the insert (8).

7. Moulding unit (1) according to Claim 6, **characterized in that** the processing unit (39) is programmed to cause the electric control signal controlling the electrically-operated valve (37) to vary according to additional parameters selected from:

- the cross section of the insert (8);
- the timing of the forming cycle;
- the timing of the boxing;
- the blow-moulding pressure (PS);
- the boxing travel.

FIG.1A

FIG.1

FIG.2

FIG.3

FIG.4

EP 3 470 203 B1

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016083711 A